# EUROPEAN PATENT SPECIFICATION

(11) **EP 3 414 870 B1**
(45) Date of publication and mention of the grant of the patent: **19.10.2022**
(21) Application number: 16705748.8
(22) Date of filing: 12.02.2016
(51) Int. Cl.: H04L 41/5009, H04L 43/091, H04L 41/5067, H04L 43/065, H04L 41/046, H04L 41/16

(54) **CALCULATING SERVICE PERFORMANCE INDICATORS**
BERECHNUNG VON DIENSTLEISTUNGSFÄHIGKEITSINDIKATOREN
CALCUL D'INDICATEURS DE PERFORMANCE DE SERVICE

(43) Date of publication of application: 19.12.2018
(73) Proprietor: Telefonaktiebolaget LM Ericsson (PUBL), 164 83 Stockholm (SE)
(72) Inventor: KERSCH, Péter, 1158 Budapest (HU); RÁCZ, Sándor, 2700 Cegléd (HU); SZABO, Geza, 6000 Kecskemet (HU)
(74) Representative: Ericsson
(86) International application number: PCT/EP2016/053011
(87) International publication number: WO 2017/137091

(56) References cited:
- WO-A1-2014/040646
- WO-A1-2015/099588
- US-A1- 2008 104 228
- US-A1- 2013 054 791
- US-A1- 2015 326 455
- US-B1- 9 119 086

## Description

### Technical Field

The present invention relates to a method of calculating a performance indicator indicating a performance of a service at one of a plurality of mobile terminals connected to said network. The present invention likewise relates to a system calculating such a performance indicator, and to a mobile terminal configured to determine a local performance indicator. More specifically, the present invention relates to correlating service performance indicators in the context of determining information on a quality of experience (QoE) perceived by a user at a corresponding mobile terminal. The present invention also relates to corresponding computer programs and computer program products.

### Background

Determining the performance of a network and related entities, such as a telecommunication network, internet links and providers, or, in general, of a service provided via a network may be important for providing a given target quality with the network, as problems and issues within the network and elsewhere can be recognized and addressed quickly. For instance, a service performance indicator indicating a so-called quality of experience (QoE) may convey useful information to network operators on whether the performance of the service is satisfactory.

In this context, particular attention is usually paid to the performance of a service at the site of a given mobile terminal, since it is oftentimes the point of "consumption" of the service (e.g. browsing the web, watching a video, listening to a stream, etc.). There are several performance indicators known capable of indicating the performance of the service at one of a plurality of mobile terminals. One example of such a performance indicator is known as quality of experience, QoE, quality of experience metric, or quality of experience value, which is generally a measure of a user's experience about a service. Naturally, this experience depends on the performance of the service as such, so that if the service performance for example is insufficient, the user experiences delays and dropouts.

The experience is generally a subjective measure and could vary from user to user. QoE, however, includes several objective measures for a specific service, i.e. listenability of voice, usability, video impairment and the like. A specific example of a QoE metric is a Mean Opinion Score, MOS, which provides a numerical indication of the perceived quality of service from the viewpoint of the user. Such an MOS may be representing voice quality of a received voice after encoding and transmission of a voice within a voice telephone service. Therefore, there is always an objective way to automatically determine and assess such experience values. Hence, a performance indicator (such as a QoE metric) can be obtained for a given network by means of specific user equipment (mobile terminal) employing a specific software configuration.

In this context it should be noted that feedback directly from the user is by definition subjective and may vary greatly from user to user. Moreover, such user feedback is not always possible since it depends on a user's will to collaborate and, with this, such data sources become unreliable. Therefore, other methods have been considered to obtain a performance indicator such as a QoE metric for a given service on an automated, machine-implemented and thus reliable basis.

A conventional approach is based on measuring the quality from paired comparison situations. This provides a quality estimate based on the comparison for instance of a source voice signal with the voice signal received over the network. A difference is determined from the two signals which may then be time averaged and mapped onto a quality estimate such as an MOS. As a result, conventional performance monitoring includes the employment of a QoE metric for Over The Top, OTT, network services such as video services, web services, and the like. Such monitoring is carried out by most network operators today, in order to determine the compliance of the actually provided network quality to, say, a promised or target quality. In the past, related monitoring solutions were based on network probes performing protocol parsing of data traffic (e.g. deep packet inspection, DPI). The maintenance of these parsers was difficult and expensive, since OTTs could change protocols and content delivery mechanisms at any time without any prior notice. Further, metrics were inaccurate since it is usually not possible to reconstruct all terminal states from network traffic. Furthermore, with more and more services using encryption, this method is mostly unusable for OTTs.

At the same time, however, service performance indicators could also be measured in an accurate way locally at the site of a mobile terminal. However, the known methods are dependent on specific services and vary according to the services. The very large number of applications and service providers makes a generic performance indicator measurement very difficult at the mobile terminal. Also, such solutions very much depend on the broad users' will to let corresponding probe or monitoring software to be installed on their terminals.

Despite the availability of many different solutions for measuring service performance, network quality, or quality of experience at the mobile terminal, there remains the need for improved measurement techniques and concepts for determining service performance indicators, whilst being both as accurate as possible and as independent from a user's will as possible.

Document WO 2014/040646 A1 describes a method for determining a network performance function indicating a user-centric quality of experience in a communication network, the method comprising: determining a set of network performance and quality indicators of the communication network, receiving a survey information over the communication network, the survey information indicating the quality of service as experienced by a group of users with the plurality of network performance indicators, determining from the received survey information a set of subjective quality of experience indicators indicating the quality of service as experienced by a group of users with the plurality of network performance indicators and defining a set of customer experience indicators representing the subjective quality of service indicators for the group of users; and determining a relationship between the set of network performance and quality indicators and the set of customer experience indicators to obtain the network performance function.

Document US 2015/326455 A1 describes techniques providing quality of experience (QoE) diagnosis and analysis for wireless communications. Implementations include generating, by a user device, a user interaction event. The user device may obtain data associated with one or more QoE metrics, and cause analysis on the data associated with the one or more metrics to identify QoE issues.

In other words, an object may be to provide a service performance monitoring solution that 1) can be applied to all subscribers in a network 2) is a generic solution applicable for most OTT service providers even if their traffic is encrypted 3) provides reliable estimates of service performance indicators.

### Summary

The above mentioned problems and drawbacks of the conventional methods are solved by the subject matter of the independent claims. Further preferred embodiments are described in the dependent claims. Examples and technical descriptions of apparatuses, products and/or methods in the description and/or drawings which are not covered by the claims are presented not as embodiments of the invention but as background art or examples useful for understanding the invention.

### Brief description of the drawings

Embodiments of the present invention and background examples, which are presented for better understanding the inventive concepts, will now be described with reference to the figures in which:
- Figure 1: shows a schematic overview of an exemplary network environment of a background example in which a performance indicator is calculated according to an embodiment of the invention;
- Figure 2: shows a general entity of a background example for calculating a service performance indicator;
- Figure 3: shows a flowchart of a general method of a background example;
- Figure 4: shows a schematic overview of a system for calculating a performance indicator according to a further embodiment of the invention;
- Figure 5: shows a schematic overview of determining one of a set of local performance indicators according to a background example;
- Figure 6A: shows an exemplary embodiment of a mobile terminal provided with a local performance indicator determination unit according to another embodiment of the present invention, and
- Figure 6B: shows exemplary display elements displayed on a mobile terminal according to yet another embodiment of the present invention.

### Detailed Description

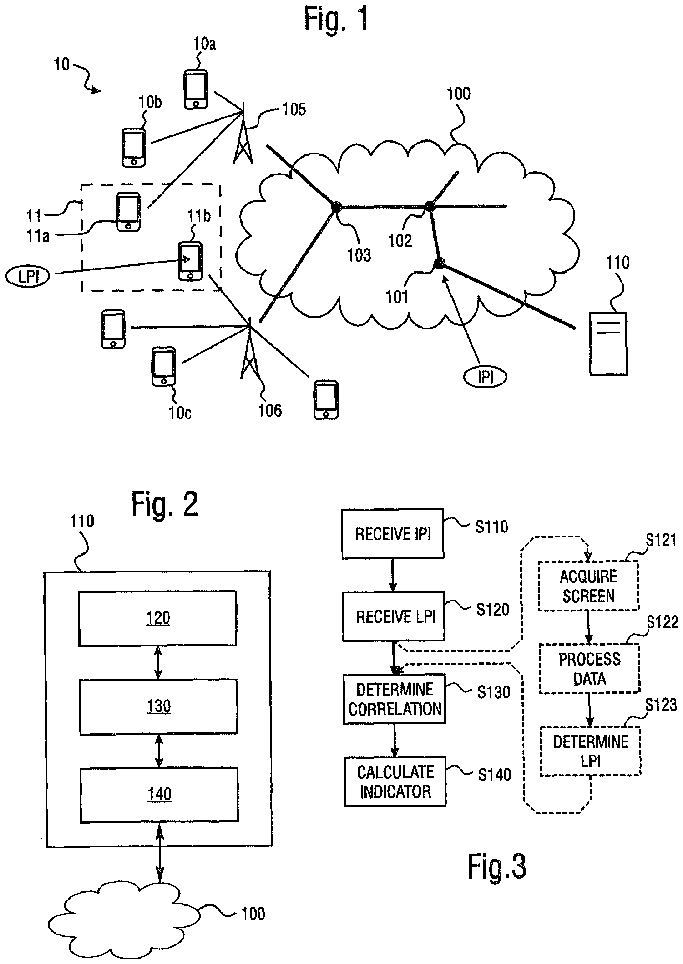

Figure 1 shows a schematic overview of an exemplary network environment in which a performance indicator is calculated according to an embodiment of the invention. A network 100, for instance a mobile communication network, includes a number of network elements 101-106 such as network nodes, routers, gateways, switches, switching centers, base stations, wireless or wire-bound links, and the like. In general, the purpose of the network 100 will be to provide a network service to a plurality of mobile terminals 10, 11, where the usual services include, telephony, video-telephony, chatting, internet browsing, email access, and the like. For this purpose the network elements 101-103 will convey data via base stations 105, 106, to and from the plurality of mobile terminals 10, 11. The base stations 105, 106 may be connected to the individual mobile terminals 10a, 10b via the usual radio links for transmitting and receiving data to and from a mobile terminal 10a, 10b. The network 100 may further have a connection to some sort of network entity 110, such as a server or a resource in a data center.

In order to allow calculating a performance indicator indicating a performance of the service, such as video services, web services, and the like at one of a plurality of mobile terminals 10a, 10b connected to the network 100, the present embodiment provides a network environment that is configured such that a set of infrastructure performance indicators IPI and a set of local performance indicators LPI may be determined, as explained in greater detail below.

Generally, in one background example useful for understanding the present invention, the plurality of mobile terminals 10a, 10b,..., 11a, ... may be connected to different network elements and base stations in the usual manner. At some point or points in the network the so-called infrastructure performance indicators IPI are determined (e.g. a shallow packet inspection at node 101, so that for instance one of the set of infrastructure performance indicators is obtained as a low-level transport layer metric by such shallow packet inspection or by any other suitable other packet inspection technique). If, for example, a group of mobile terminals receives data via one of such network elements, the correlation between the corresponding infrastructure performance indicators and an actually perceived local performance indicator at the mobile terminals may be strong.

In one embodiment of the present invention the set of infrastructure performance indicators may comprise one or more of a data traffic metric such as transport layer metric and lower layer metrics, e.g. a Transmission Control Protocol, TCP, metric, a Quick User Datagram Protocol, UDP, Internet Connection, QUIC metric. One of the set of infrastructure performance indicators may be determined at a network element such as a node, base station, switching center, gateway, router, and so on. Further infrastructure performance indicators may be determined likewise at the same network element 101 or at other network elements 102,....

In the present background example useful for understanding the invention, the network environment is configured to determine and receive a so-called set of local performance indicators LPI, wherein, for example, individual local performance indicators LPI may be determined locally on selected mobile terminal 11a, and 11b. In a way, these mobile terminals represent a subset 11 of the plurality of mobile terminals being served by the network. In one embodiment, this subset 11 of the mobile terminals 11; 11a, 11b may be provided with a local performance indicator determination unit such as an application ("app") configured to determine locally at the respective mobile terminal a local performance indicator LPI for building up a corresponding set of local performance indicators. The application may be implemented as an application or operating system module distributed by a network operator, a device manufacturer, or another party.

For example in one background example useful for understanding the present invention the subset 11 of mobile terminals that are provided with the capability of determining a local performance indicator LPI may be relatively small compared to the total number of the plurality 10 of mobile terminals. In other words, only a few percent or p.p.t. of the plurality 10 of mobile terminals may be provided with the capabilities to determine one or more of local performance indicators LPI. Naturally, however, it is to be noted that the more mobile terminals are provided with the capability of determining a local performance indicator LPI, the better a correlation between the set of local performance indicators and the set of infrastructure performance indicators may be, and with this, the better and more accurate the performance indicator of network will be. It should be clear however, that the present disclosure does not propose to provide all or the majority of mobile terminals with such local probes, since this would imply cooperation by users and mobile terminal owners on a broad basis. It is, however, exactly one object of the present embodiments to minimize the dependence on the local performance indicators.

Therefore, the present embodiments propose that the subset 11 of mobile terminals comprises a number of mobile terminals 11; 11a, 11b that is sufficient for establishing or determining a correlation between a given set of infrastructure performance indicators IPI and a set of local performance indicators LPI. One of the set of local performance indicators LPI may for instance be a metric indicating a quality of experience, QoE, for the user at a given mobile terminal 11; 11a, 11b.

In one background example useful for understanding the present invention, the calculated performance indicator is calculated for a mobile terminal 10; 10a, 10b, 10c for which a local performance indicator - being actually determined locally at the mobile terminal - is not available. That is, a user perceived performance indicator indicating a performance of the service at another one of the subset of mobile terminals is calculated.

In this way, an background example useful for understanding the present invention allows for obtaining a service performance indicator (e.g. QoE metric) for a particular mobile terminal which is not equipped with any dedicated probe, measurement or indicator determining functions. As a consequence, an embodiment of the present invention allows for obtaining a service performance indicator for an arbitrary mobile terminal whilst only a subset of mobile terminals is provided with a probe functionality (determination unit). Basically, there may thus be no difference for analysis and assessment in performance indicators, regardless whether an indicator was actually measured at a mobile terminal or whether it was calculated in line with an embodiment of the present invention.

The actual processing of the received and obtained indicators may be effected at a specific location, for example at a dedicated server or at corresponding processing resources of a data center. In general, these processing and memory resources are referred to as a so-called network entity in the context of the present disclosure. In the network environment, the service performance indicator may thus be calculated by the network entity 110 which may have a direct connection to the network 100 and which is explained in greater detail in the following.

Figure 2 shows a schematic view of such a network entity 110. Specifically, the entity is configured to perform the calculation of a performance indicator according to one or more background examples useful for understanding the present invention. The entity 110 generally comprises processing means 130, memory means 120, and communication means 140. As already mentioned, the entity may be connected to the network 100 over the communication means 140 and may be implemented as, for instance, a server, a computer, or processing resources provided by a data center or any suitable network element. Likewise, the entity 110 may be outside or inside the network 100, wherein in the latter case any network node or element may be provided with the corresponding functionalities.

Generally, the mentioned processing means 130 may be a processing unit, a processing unit collection, CPU, a share of a data/processing center and so on. The processing means 130 are capable of performing a determination of a correlation between a set of infrastructure performance indicators and a set of local performance indicators, and of calculating the performance indicator indicating the performance of the service at one or more mobile terminals using this correlation and one or more of infrastructure performance indicators. Here, it should be noted that in general the embodiments envisage that the correlation is determined before the service performance indicator is calculated, which, in turn implies, that the infrastructure performance indicators used for determining the correlation may be different from the infrastructure performance indicators used for calculating the service performance indicator. Likewise, the infrastructure performance indicators used for determining the correlation may thus be determined and received earlier in time as compared to the infrastructure performance indicators used for calculating the service performance indicator.

The memory means 120 may specifically store code instructing the processing means 130 during operation to implement any method embodiment of the present invention. Particularly, the memory means 120 may store code instructing the processing means 130 during operation to receive a set of infrastructure performance indicators, each infrastructure performance indicator being determined for a part of the network conveying data to one or more of said mobile terminals connected to the network; to receive a set of local performance indicators, each local performance indicator being determined locally at one mobile terminal of a subset of the plurality of mobile terminals connected to the network; to determine a correlation between the set of infrastructure performance indicators and the set of local performance indicators; and to calculate said performance indicator indicating the performance of the service at one or more mobile terminals using said correlation and one or more of infrastructure performance indicators of said set of infrastructure performance indicators.

For instance in one background example useful for understanding the present invention the communication means 140 may connect to the network 100. Through the communication means 140 the entity 110 may receive the set of infrastructure performance indicators IPI and the set of local performance indicators LPI. However, there may be more than one communication means to separately receive the set of infrastructure performance indicators and the set of local performance indicators, and for instance there may be several and/or individual ports provided for receiving the set of infrastructure performance indicators and the set of local performance indicators at the communication means.

Further, in one background example useful for understanding the present invention the communication means 140 may be connected to several entities apart from the network 100 in order to receive the set of infrastructure performance indicators and/or the set of local performance indicators. For instance there may be a data collection center storing the set of infrastructure performance indicators and there may be a separate second data center for storing the set of local performance indicators which may be connected to entity 110 through the communication means 140. In general, the entity 110 may thus be provided with means to perform the method according to the embodiments of the present invention.

Figure 3 shows a flowchart of a method of calculating a performance indicator according to a general method embodiment of the present invention. This background example useful for understanding the inventioninvolves in a step S110 a receiving of a set of infrastructure performance indicators, wherein each infrastructure performance indicator may be determined for a part of the network conveying data to one or more of the mobile terminals connected to the network. The part of the network conveying data to at least one of the mobile terminals may for instance be a single network element, several network elements, e.g. network elements covering a certain area, or all network elements, i.e. the entire network 100. This way certain areas of the network may be probed in order to determine a performance indicator specific for that area of the network 100.

In a step S120 (before, after or at the same as step S110) a set of local performance indicators is received, wherein each local performance indicator may be determined locally at one mobile terminal of a subset of the plurality of mobile terminals connected to the network. In one embodiment of the invention the subset of the plurality of mobile terminals includes mobile terminals each provided with means to determine a set of local performance indicators, such as a local performance indicator determination unit. The local performance indicator determination unit may be a software program, e.g. an application, running on the mobile terminal. In one embodiment of the invention the set of local performance indicators includes at least a local performance indicator represented by a quality of experience, QoE, value or metric.

In another background example useful for understanding the present invention determining at least one local performance indicator of the set of local performance indicators may be determined by an application displayed on the mobile terminal, when the screenshot data may be acquired. This may specifically involve the optional steps S121 to S123 replacing and/or complementing step S120, as described in greater detail below. The local performance indicator may thus be determined locally at the mobile terminal. In one embodiment of the present invention the set of infrastructure performance indicators may be determined for a specific user session.

The method may further comprise the step of determining S130 a correlation between the set of infrastructure performance indicators and a set of local performance indicators. It may be assumed that there may be generally a good correlation between at least one of the set of infrastructure performance indicators and at least one of the set of local performance indicators. However, in case the correlation may not be strong enough to derive an exact metric for the performance indicator such as an exact QoE metric, e.g. a webpage download time or video initial buffering, it may be assumed the correlation may be suitable to determine a good or bad local performance indicator, i.e. distinguish between a good and bad QoE value, based on the infrastructure performance indicator with high reliability. The correlation between the set of infrastructure performance indicators and the set of local performance indicators may be stored on respective storage means for subsequent processing.

The method may further comprise a step of calculating S140 the performance indicator indicating the performance of the service at one or more mobile terminals. The correlation together with one or more of the set of infrastructure performance indicators may be used in the step of calculating S140. The correlation may be requested by appropriate processing means from storage means for storing the correlation.

In one background example useful for understanding the invention the method may further comprise optional steps for determining one of the set of local performance indicators. The method then may comprise a step S121 of acquiring screenshot data displayed on one mobile terminal of said the subset 11 of mobile terminals. That is, the mobile terminal may display screenshot data representing the actual usage of the user. Such usage may be for instance loading of a video, requesting a website or the like. The screenshot data may be acquired by taking a screenshot or snapshot, i.e. an image of the content displayed on a screen, i.e. display, of the mobile terminal, of the screenshot data displayed on the mobile terminal. The screenshot data may be temporarily stored on appropriate storing means for further processing.

The method may further comprise a step of processing S122 the acquired screenshot data for determining the presence of a screen display element indicating the performance of the service at said mobile terminal. For processing the screenshot data, the screenshot data may be requested by appropriate processing means, as detailed below. In the step of processing S122 the acquired screenshot data the presence of a screen display element may be determined. Such a screen display element may be determined by an application such as a video streaming application or web browser running in a foreground of the screen of the mobile terminal such that a screenshot would contain screenshot data related to the application. The screen display element may be tracked over time in order to adequately indicate the performance of the service. That is, the screen display element may change rapidly over time indicating for instance a high data traffic speed of the network.

The method may further comprise a step of determining S123 at least one local performance indicator of the set of local performance indicators using the screen display element. That is, the screen display element such as a spinner, process bar or the like may be used to determine one local performance indicator such as a quality of experience value or metric.

In order to determine a correlation between the set of infrastructure performance indicators and the set of local performance indicators there may be different models used measuring the quality from paired comparison situations. Such a model typically may use algorithms to establish the correlation. Such a model may be generated for each one of the set of infrastructure performance indicators and each one of the set of local performance indicators for instance by stepping through and observing changes in a data array corresponding to one of the infrastructure performance indicators being modeled. In such a data array changes in time of one of the set of infrastructure performance indicators may be monitored together with changes in one of the set of local performance indicators. The data array may be stored on respective storage means.

In a another background example useful for understanding the present invention a correlation map or correlation data or a correlation data array may be generated from the correlation between the set of infrastructure performance indicators and the set of local performance indicators, and the correlation map may be input in a learning machine in order to update and/or maintain and/or verify the correlation map continuously or in predetermined time intervals or upon request.

In yet another embodiment of the present invention accuracy of the correlation map may be verified by calculating at least one local performance indicator for at least one infrastructure performance indicator from the subset of the plurality of mobile terminals and comparing the calculated local performance indicator with the received local performance indicator of the subset of the plurality of mobile terminals.

Local performance indicator can be a delay metric, indicating delay suffered on the mobile terminal when accessing a given service.

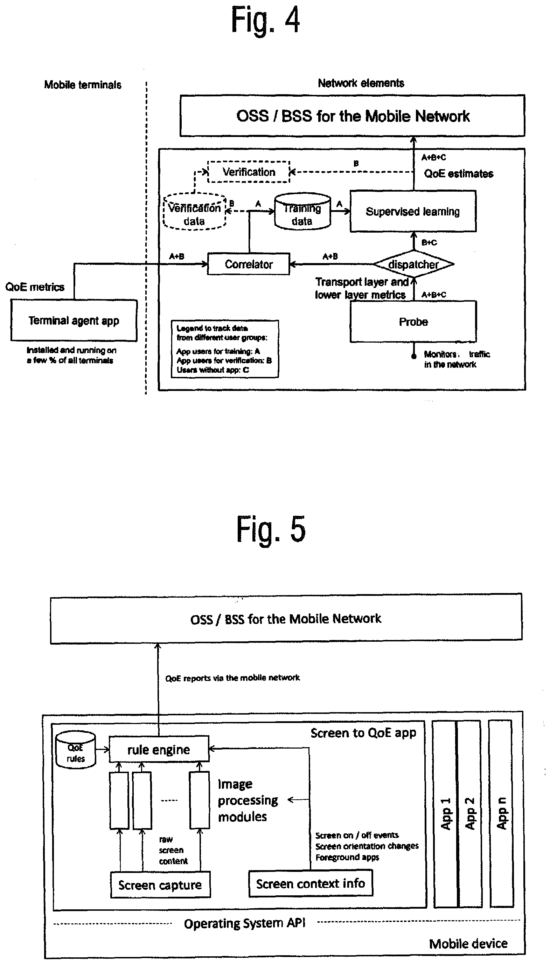

Figure 4 shows a schematic overview of a system for calculating a performance indicator according to a further embodiment of the invention. Specifically, it is shown the updating and/or maintaining and/or verifying the correlation between a set of infrastructure performance indicators and a set of local performance indicators according to one embodiment of the present invention. In the present embodiment the mobile terminal of a subset 11, i.e. a mobile terminal or mobile device, may be provided with a local performance indicator determination unit, i.e. a terminal agent app or terminal agent application. The terminal agent app may be providing the set of local performance indicators, i.e. QoE metrics, to a correlator, i.e. correlation unit, for correlating the QoE metrics with at least one of the set of infrastructure performance indicators such as transport layer and lower layer metrics. The transport layer and lower layer metrics are provided by a network probe. A dispatcher separates the transport layer and lower layer metrics received from the probe in at least two sets and forwards one set to the correlator and another set to the learning machine or a supervised learning machine.

In the present embodiment the correlator may separate the received correlated QoE metrics and transport layer and lower layer metrics for verification and training for instance as correlation data. The correlation data may be stored in respective verification data centers and training data centers.

The training data center may provide the correlated infrastructure performance indicators and the local performance indicators to the learning machine. The learning machine then calculates the performance indicator for the transport layer and lower layer metrics received from the dispatcher and the correlation received from the training data center. The performance indicator, i.e. QoE estimate, may be forwarded to the verification unit in order to verify that the learning machine calculated the QoE estimate correctly.

If there is any difference between the infrastructure performance indicator and transport layer and lower layer metric received from the verification data center and the local performance indicator received from the learning machine respective feedback may be given to the correlator in order to adjust the correlation between the set of infrastructure performance indicators and a set of local performance indicators.

In other words, transport layer data from the probe may be routed by the dispatcher depending on whether a user has the terminal agent app installed or not. For users having the terminal agent app installed, transport layer metrics from the probe are routed to the correlator unit and correlated with QoE metrics.

In other words, by combining QoE values from reporting terminal agent apps with transport layer metrics from a network probe models for transport layer metrics may be built and maintained and further QoE estimates mappings may be obtained. Advantages of this approach may be the following. The QoE values reporting terminal agent app may only be installed in a few percent of the entire mobile terminals 10a, 10b. This way large amounts of up to date and accurate training data may be made continuously available, which may be an important pre-requisite for the learning machine, especially when data patterns might change from one day to the other without any notice.

In one embodiment infrastructure performance indicator of the set of infrastructure performance indicators is a radio access network, RAN, metric indicating RAN-level performance for the data traffic.

In one background example correlation data, comprising the correlation between the set of infrastructure performance indicators and a set of local performance indicators may be used as training data only from a part of the subset, e.g. 50%, of users with QoE reporting agents installed to be able to continuously monitor the accuracy of QoE estimates. Data from remaining terminal agent apps of users, e.g. the other 50%, may be routed on two separate paths simultaneously that is correlation data being fed to the verification unit and probe data being fed to the supervised learning unit and derived QoE estimates being routed to the verification unit for comparison. The QoE estimates may then be forwarded to an operations support system or a business support system of the network for further analysis and actions such as identifying network problems or supplying user support.

Figure 5 shows a schematic overview of determining one of a set of local performance indicators according to another embodiment of the present invention. In the present embodiment the mobile terminal (e.g. 11a of Figure 1) is provided with an operating system application program interface API running one or more applications on the mobile terminal. Screenshot data displayed on the mobile terminal may be acquired, i.e. screen capturing may be performed. The acquired screenshot data may be forwarded to a plurality of image processing units for determining the presence of a screen display element. Information on the screen display element may be forwarded to a rule engine for determining one of the set of local performance indicators based on a QoE rule determining a QoE estimate for instance based on a given application in the foreground of the mobile terminal. In other words a "Screen to QoE" app such as the terminal agent app may be installed on mobile devices of users having opted in to provide QoE reports such as one of the determined set of the local performance indicators.

In yet another embodiment of the present invention processing the acquired screenshot data for determining the presence of a screen display element may be a pattern recognition method identifying a pattern in the display element and wherein at least one local performance indicator of the set of local performance indicators indicates a pattern change. Pattern change can be pixel differences between subsequent screenshots.

In one background example determining at least one local performance indicator of the set of local performance indicators may be determined by screen related information describing and operation of the screen, when the screenshot data may be acquired.

In other words, the "Screen to QoE" app may have two data collection modules using standard operating system APIs on the mobile device: first an acquisition unit configured to acquiring screenshot data displayed on one mobile terminal of said subset of mobile terminals, or in other words a screen capture module getting periodical snapshots of raw screen content, and second a screen related information acquisition unit, or in other words a screen context info collection module, getting screen related information such as screen context information, e.g. screen on/off events, orientation changes and apps being in the foreground at a given point in time.

In another background example useful for understanding the present invention the screen related information may be at least one of a screen on/off event, screen orientation change or information on an app being in a foreground of the terminal at a given point in time.

In another embodiment of the present invention one or more of the set of infrastructure performance indicators are determined in parallel.

That is, raw screen content such as the screenshot data may be analyzed in parallel by different image processing modules focusing on generic user interface building blocks, e.g., progress or stall indicators. Outputs from image processing modules and the screen context info collection module may be fed to a rule engine module. Predefined QoE rules may specify for each application running on the mobile terminal how to map image processing module outputs to QoE reports when this app is in the foreground. The QoE report for instance including the determined performance indicator or QoE estimate may be sent for instance via the mobile network for instance to a network management system of a mobile network.

In another background example periodically obtained raw screen content may be analyzed in parallel by different image processing modules including but not limited to loading indicator search module looking for loading indicator pattern in raw screen content, hyperlink selection search to identify user interactions triggering loading of new content, blank screen detector, error message detector, screen change rate detector, video resolution detector.

Subsequently, outputs from the plurality of image processing modules and the screen context info collection module may be fed to a rule engine module. Predefined QoE rules may specify for each application how to map image processing module outputs to QoE reports when this app is in the foreground. The content of QoE reports depends on the functionality of foreground apps, e.g. for video applications video resolution estimates and play and stall periods and for web applications page load times

The screen context data may provide important control information to the image processing module and the rule engine module, for instance as detailed in the following: When screen is off, all image processing modules may be shut down to save CPU and battery resources. When the screen orientation changes, then image processing modules may need to know that this is a temporary transition period that might need to be skipped from image change analysis.

Also, the rule engine may need to know that some screen patterns are to be expected at different parts of the screen after the orientation change. Knowing which app is in the foreground may be important information for the rule engine module to build QoE metrics from the output of individual image processing modules, e.g., for video applications video freeze length estimates may be derived from the output of the screen change rate detector and the loading indicator module. In contrast, for a browser, page rendering time may be estimated combining output from e.g., the hyperlink selection search, the blank screen detector and the screen change rate detector modules.

QoE reports may be sent via the network 100 to a network management system of a mobile network and may be used for a number of different use cases including but not limited to traffic prioritization, customer care support, network optimization, network troubleshooting.

With respect to mobile resource usage, image processing modules may be completely turned off when the screen of the device is turned off. This means no resource usage at all when idle. Screen capture itself does not consume extra resources since it is implemented using shared memory. Some image processing algorithms might be more resource consuming, however, this may be reduced with pixel sampling.

With respect to privacy, raw screen content may potentially include sensitive information. However, the information may be processed only locally and may never leave the device. That is, only condensed QoE reports may be sent to the network management system containing user ID, timestamp and QoE metrics for foreground applications. In addition, the screen to QoE app may be installed and used in an opt-in way where the user actively decides to allow such processing of data.

In yet another background example useful for understanding the present invention wherein the screenshot data may be sent to a network client carrying out at least processing the acquired screenshot data and determining the local performance indicator.

In another embodiment of the present invention acquiring screenshot data may be carried out continuously or in predetermined intervals.

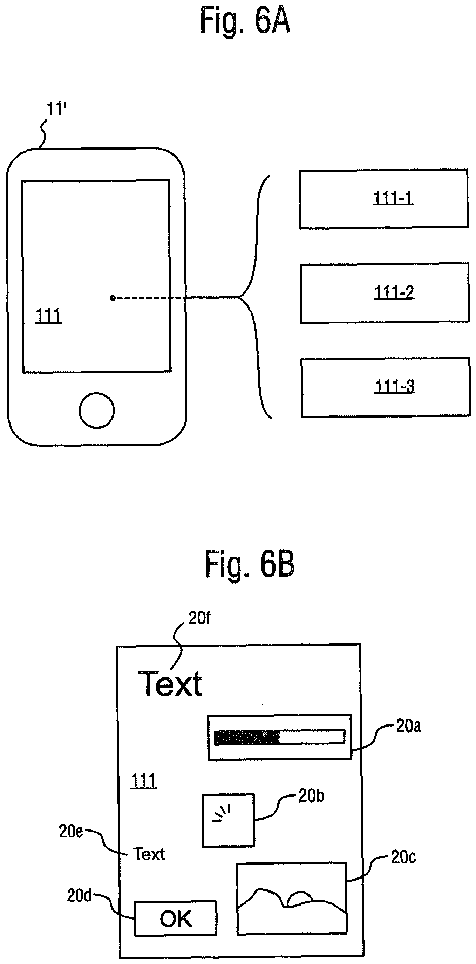

Figure 6A shows an background example of a mobile terminal 11' provided with a local performance indicator determination unit according to one embodiment of the present invention. The local performance indicator determination unit may be provided in the mobile terminal 111' that usually comprises the display 111, processing means, memory means, and communication means.

The display 111 may display content comprising screenshot data. The content may be determined by an application running in the foreground of the display 111 of the terminal 10b.The processing means may be a processing unit, CPU, or the like. The processing means may thus implement an acquisition unit 111-1 for acquiring the screenshot data and further processing the screenshot data for determining the presence of a screen display element. The screenshot data may be stored on the memory means before processing means process the acquired screenshot data. Further the determined presence of a screen display element may be stored. The processing means may further implement a processing unit 111-2 for processing said acquired screenshot data for determining the presence of a screen display element indicating the performance of the service at said one mobile terminal. The processing means may further implement a determining unit 111-3 for determining at least one local performance indicator of the set of local performance indicators using the stored screen display.

Figure 6B shows exemplary display elements displayed on a mobile terminal according to one embodiment of the present invention. The image shown in figure 6B may be the content displayed on the display 111 of the terminal 11' shown in figure 6A. A variety of screen display elements are as usual displayed on the display 111 during use and operation of the mobile terminal 11', whilst only some elements are suitable for indicating a local performance of the service at the mobile terminal. In general, display elements 20a-20f may be user interface building blocks generally used to display content on the display 111 of the mobile terminal 11'. These include but are not limited to a process bar 20a, i.e. progress bar, indicating progression of an operation, such as a download, file transfer, or installation, a spinning wheel 20b, i.e. wait cursor or throbber or any other graphical control element, indicating program performing an action in the background such as downloading content, conducting intensive calculations or communicating with an external device, and content related elements such as an image building up 20c, a user input request 20d, or displayed text or hyperlinks 20e, 20f.

As already mentioned, an accurate measure for the service performance or quality of experience may be not available from the analysis of network traffic due to a number of reasons such as encryption, client settings and behavior not known to the network, etc. It may be measured accurately only on the mobile device. However, the large number of apps and OTT service providers makes generic QoE measurement very challenging on the mobile device. The present embodiment, however, makes use of the fact that quality of experience for mobile services may be almost always visible for the user from the screen and mobile operating systems recently started exposing APIs to access this raw screen content. For example, the processing unit 111-2 may determine that a spinner 20b is present in the captured display content for some time and may thus determine a quite specific local performance indicator (i.e. long spinning, low performance). The analysis of a progress bar 20a may even provide more detailed information on the actual process. Further, the appearance of and/or change in text, graphic and video elements 20f, 20e, 20d, 20c may be used for determining a sufficiently good local performance indicator. It should be clear that the proposed embodiment is independent from parsing and encryption, since it employs the same data content that the user experiences, i.e. the visual and/or sound experience. As for the latter, there may also be a probe at the mobile terminal that senses the start and/or behavior of audio playback on the terminal which may, of course, not generally reflected by display elements on the display 111.

Instead of partnering with many of OTT service providers and integrating monitoring solutions to an even higher number of apps, a small number of image processing primitives are defined on raw screen content from which QoE estimates can be created with good accuracy. These image processing primitives may be app-independent building blocks. To calculate QoE Key Performance Indicators, KPIs, for a given app, the only app specific part to be defined may be a set of rules describing how to map image processing primitive outputs to QoE metrics for the given app.

The present invention may deliver performance indicators also for mobile terminals not having a performance indicator determination unit installed. The present invention may also be capable of dynamically adapting to eventual changes in content delivery mechanisms and protocols. The present invention may further be capable of evaluating performance indicators automatically in the background and does not require any user interaction. As a result, performance indicators are not biased by the subjectivity of users. The present invention may further yet be capable of providing a generic solution to performance indicator monitoring on a mobile terminal such as a mobile device independent of the operating system running on the mobile device where screenshot data such as raw screen content may be exposed via an API to applications. The present invention may be applied to any user activity on mobile devices regardless of which applications, OTTs and protocols are involved. The present invention may further yet be capable of easy maintenance compared to an application or OTT specific method as the present invention focuses on screen display element such as generic user interface building blocks common across different applications. In order to support a new application or a new version of an application, only the correlation needs to be added or updated.

According to another embodiment of the present invention, there is provided a determination unit or a method for determining a local performance indicator, comprising the acquiring of screenshot data displayed on one mobile terminal of a mobile terminal; the processing of said acquired screenshot data for determining the presence of a screen display element indicating the performance of a service at said one mobile terminal; and the determining of at least one local performance indicator of the set of local performance indicators using said screen display element.

According to another background example useful for understanding the present invention, there is provided a local performance indicator determination unit for determining a local performance indicator for a mobile terminal connected to a network, comprising an acquisition unit configured to acquiring screenshot data displayed on one mobile terminal of said subset of mobile terminals; a processing unit configured to processing said acquired screenshot data for determining the presence of a screen display element indicating the performance of a service at said one mobile terminal; and an analyzing unit configured to determining at least one local performance indicator of the set of local performance indicators using said screen display element.

According to another embodiment of the present invention, there is provided a mobile terminal provided with a local performance indicator determination unit for determining a local performance indicator for a mobile terminal connected to a network, comprising an acquisition unit configured to acquiring screenshot data displayed on one mobile terminal of said subset of mobile terminals; a processing unit configured to processing said acquired screenshot data for determining the presence of a screen display element indicating the performance of the service at said one mobile terminal; and an analyzing unit configured to determining at least one local performance indicator of the set of local performance indicators using said screen display element.

Although background examples useful for understanding have been described, these only serve to provide a better understanding of the invention defined by the independent claims and are not to be seen as limiting.

## Claims

1. A method of calculating a performance indicator indicating a performance of a service at one of a plurality of mobile terminals (10; 10a, 10b, 10c) connected to a network (100), the method comprising the steps of:
- receiving (S110) in a network entity (110) a set of infrastructure performance indicators, each infrastructure performance indicator being determined for a part of the network (100) conveying data to one or more of said mobile terminals (10; 10a, 10b, 10c, 11; 11a, 11b) connected to the network (100);
- determining one of local performance indicators, each local performance indicator being determined locally at one mobile terminal of a subset of the plurality of mobile terminals (11; 11a, 11b) connected to the network (100) and provided with a capability to determine one or more local performance indicators, said step comprising the steps of:
- acquiring (S121) screenshot data displayed on one mobile terminal (11; 11a, 11b) of said subset of mobile terminals;
- processing (S122) said acquired screenshot data for determining the presence of a screen display element (20a, 20b, 20c, 20d, 20e, 20f) indicating the performance of the service at said one mobile terminal;
- determining (S123) at least one local performance indicator of the set of local performance indicators using said screen display element (20a, 20b, 20c, 20d, 20e, 20f);
the method further comprising:
- receiving (S120) in the network entity (110) a set of the local performance indicators;
- determining (S130) a correlation between the set of infrastructure performance indicators and the set of local performance indicators; and
- calculating (S140) said performance indicator indicating the performance of the service at one or more of the plurality of mobile terminals (10; 10a, 10b, 10c) not equipped with any indicator determining functions, using said correlation and one or more infrastructure performance indicators of said set of infrastructure performance indicators.

2. The method according to claim 1, wherein the calculated performance indicator is calculated for a mobile terminal (10; 10a, 10b, 10c) for which a local performance indicator determined locally at the mobile terminal is not available.

3. The method according to claim 1 or 2, wherein the set of infrastructure performance indicators is determined for a specific user session and/or one or more of the set of infrastructure performance indicators are determined in parallel.

4. The method according to any of claims 1 to 3, wherein at least one infrastructure performance indicator of the set of infrastructure performance indicators is a transport layer metric value indicating transport layer performance for the data traffic and/or at least one infrastructure performance indicator of the set of infrastructure performance indicators is a radio access network, RAN, metric indicating RAN-level performance for the data traffic.

5. The method according to any of claims 1 to 4, wherein at least one local performance indicator of the set of local performance indicators is a Quality of Experience, QoE, value indicating performance at a mobile terminal and/or at least one local performance indicator of the set of local performance indicators is a delay metric, indicating delays suffered on the mobile terminal (11; 11a, 11b) when accessing a given service.

6. The method according to any of claims 1 to 5, wherein determining at least one local performance indicator of the set of local performance indicators is determined for an application displayed on the mobile terminal, via screenshot data acquired; and/or determining at least one local performance indicator of the set of local performance indicators is influenced by screen related information describing an operation of the screen (111); and/or the screen related information is at least one of a screen on/off event, screen orientation change or information on an app being in a foreground of the terminal at a given point in time.

7. The method according to any of claims 1 to 6, wherein processing the acquired screenshot data for determining the presence of a screen display element (20a, 20b, 20c, 20d, 20e, 20f) is a pattern recognition method identifying a pattern or one or more pattern changes in the display element.

8. The method according to claim 5, wherein pattern changes are pixel differences between subsequent screenshots.

9. The method according to any of claims 2 to 8, wherein acquiring and processing screenshot data is carried out continuously or in predetermined intervals and/or the display element is a user interface building block.

10. The method according to any of claims 1 to 9, wherein accuracy of determining a correlation between the set of infrastructure performance indicators and the set of local performance indicators is verified by calculating at least one performance indicator for at least one infrastructure performance indicator from the subset of the plurality of mobile terminals and comparing the calculated performance indicator with the received local performance indicator of the subset of the plurality of mobile terminals.

11. A network entity (110) for calculating a performance indicator indicating a performance of a service at one of a plurality of mobile terminals (10; 10a, 10b, 10c) connected to a network (100) and not equipped with any indicator determining functions, the network entity (110) comprising:
- a first receiving module configured to receive a set of infrastructure performance indicators, each infrastructure performance indicator being determined for a part of the network (100) conveying data to one or more of said mobile terminals connected to the network,
- a second receiving module configured to receive a set of local performance indicators, each one of the local performance indicators being determined locally at one mobile terminal of a subset of the plurality of mobile terminals (11; 11a, 11b) connected to the network (100) and provided with a capability to determine one or more local performance indicators, further configured to perform the steps of:
- acquiring (S121) screenshot data displayed on one mobile terminal (11; 11a, 11b) of said subset of mobile terminals;
- processing (S122) said acquired screenshot data for determining the presence of a screen display element (20a, 20b, 20c, 20d, 20e, 20f) indicating the performance of the service at said one mobile terminal;
- determining (S123) at least one local performance indicator of the set of local performance indicators using said screen display element (20a, 20b, 20c, 20d, 20e, 20f);
- a correlation module configured to determine a correlation between the set of infrastructure performance indicators and the set of local performance indicators, and
- a calculation module configured to calculate said performance indicator indicating the performance of the service at one or more mobile terminals (10; 10a, 10b, 10c) not equipped with any indicator determining functions, using said correlation and one or more of infrastructure performance indicators of said set of infrastructure performance indicators.

12. A system for calculating a performance indicator, the system including a network entity according to claim 11 and a mobile terminal (11; 11a, 11b) connected to the network entity via a network, the mobile terminal comprising:
- an acquisition unit (111-1) configured to acquiring screenshot data displayed on one mobile terminal of a subset of mobile terminals during a specific user session representing the actual usage of the user;
- a processing unit (111-2) configured to processing said acquired screenshot data for determining the presence of a screen display element indicating the performance of a service at the one mobile terminal; and
- an analyzing unit (111-3) configured to determining at least one local performance indicator using said screen display element.

13. A computer program comprising code, wherein the code, when executed on processing resources, instructs said processing resources to perform a method according to any of the claims 1 to 10.

14. A computer program product storing code, wherein the code, when executed on processing resources, instructs said processing resources to perform a method according to any of the claims 1 to 10.

## Patentansprüche

1. Verfahren zur Berechnung eines Leistungsindikators, der eine Leistung eines Dienstes an einem von einer Mehrzahl von mobilen Endgeräten (10; 10a, 10b, 10c) angibt, die mit einem Netzwerk (100) verbunden ist, wobei das Verfahren die folgenden Schritte umfasst:
- Empfangen (S110) einer Menge von Infrastrukturleistungsindikatoren in einer Netzwerkentität (110), wobei jeder Infrastrukturleistungsindikator für einen Teil des Netzwerks (100) bestimmt wird, der Daten an eines oder mehrere der mobilen Endgeräte (10; 10a, 10b, 10c, 11; 11a, 11b) überträgt, die mit dem Netzwerk (100) verbunden sind;
- Bestimmen eines von lokalen Leistungsindikatoren, wobei jeder lokale Leistungsindikator an einem mobilen Endgerät einer Teilmenge der Mehrzahl von mobilen Endgeräten (11; 11a, 11b), die mit dem Netzwerk (100) verbunden und mit einer Fähigkeit zum Bestimmen eines oder mehrerer lokaler Leistungsindikatoren versehen ist, lokal bestimmt wird, wobei der Schritt die folgenden Schritte umfasst:
- Erfassen (S121) von Screenshot-Daten, die auf einem mobilen Endgerät (11; 11a, 11b) der Teilmenge von mobilen Endgeräten angezeigt werden;
- Verarbeiten (S122) der erfassten Screenshot-Daten zum Bestimmen des Vorhandenseins eines Bildschirmanzeigeelements (20a, 20b, 20c, 20d, 20e, 20f), das die Leistung des Dienstes an dem einen mobilen Endgerät angibt;
- Bestimmen (S123) mindestens eines lokalen Leistungsindikators der Menge von lokalen Leistungsindikatoren unter Verwendung des Bildschirmanzeigeelements (20a, 20b, 20c, 20d, 20e, 20f);
wobei das Verfahren ferner umfasst:
- Empfangen (S120) einer Menge der lokalen Leistungsindikatoren in der Netzwerkentität (110);
- Bestimmen (S130) einer Korrelation zwischen der Menge von Infrastrukturleistungsindikatoren und der Menge von lokalen Leistungsindikatoren; und
- Berechnen (S140) des Leistungsindikators, der die Leistung des Dienstes an einem oder mehreren der Mehrzahl von mobilen Endgeräten (10; 10a, 10b, 10c) angibt, die mit keiner Indikatorbestimmungsfunktion ausgestattet sind, unter Verwendung der Korrelation und eines oder mehrerer Infrastrukturleistungsindikatoren der Menge von Infrastrukturleistungsindikatoren.

2. Verfahren nach Anspruch 1, wobei der berechnete Leistungsindikator für ein mobiles Endgerät (10; 10a, 10b, 10c) berechnet wird, für welches kein lokaler Leistungsindikator verfügbar ist, der lokal am mobilen Endgerät bestimmt wird.

3. Verfahren nach Anspruch 1 oder 2, wobei die Menge von Infrastrukturleistungsindikatoren für eine spezifische Benutzersitzung bestimmt wird, und/oder einer oder mehrere der Menge von Infrastrukturleistungsindikatoren parallel bestimmt werden.

4. Verfahren nach einem der Ansprüche 1 bis 3, wobei mindestens ein Infrastrukturleistungsindikator der Menge von Infrastrukturleistungsindikatoren ein Transportschicht-Metrikwert ist, der Transportschichtleistung für den Datenverkehr angibt, und/oder mindestens ein Infrastrukturleistungsindikator der Menge von Infrastrukturleistungsindikatoren eine Funkzugangsnetzwerk-,RAN-,Metrik ist, die Leistung auf RAN-Ebene für den Datenverkehr angibt.

5. Verfahren nach einem der Ansprüche 1 bis 4, wobei mindestens ein lokaler Leistungsindikator der Menge von lokalen Leistungsindikatoren ein Erfahrungsqualitäts-,QoE-,Wert ist, der Leistung an einem mobilen Endgerät angibt, und/oder mindestens ein lokaler Leistungsindikator der Menge von lokalen Leistungsindikatoren eine Verzögerungsmetrik ist, die Verzögerungen angibt, die am mobilen Endgerät (11; 11a, 11b) beim Zugriff auf einen gegebenen Dienst erfahren werden.

6. Verfahren nach einem der Ansprüche 1 bis 5, wobei das Bestimmen mindestens eines lokalen Leistungsindikators der Menge von lokalen Leistungsindikatoren für eine Anwendung, die auf dem mobilen Endgerät angezeigt wird, mittels erfasster Screenshot-Daten bestimmt wird; und/oder das Bestimmen mindestens eines lokalen Leistungsindikators der Menge von lokalen Leistungsindikatoren durch bildschirmbezogene Informationen beeinflusst wird, die einen Betrieb des Bildschirms (111) beschreiben; und/oder es sich bei den bildschirmbezogenen Informationen um mindestens eines von einem Bildschirm-Ein-/Aus-Ereignis, einer Bildschirmausrichtungsänderung oder Informationen über eine App handelt, die zu einem gegebenen Zeitpunkt in einem Vordergrund des Endgeräts ist.

7. Verfahren nach einem der Ansprüche 1 bis 6, wobei das Verarbeiten der erfassten Screenshot-Daten zum Bestimmen des Vorhandenseins eines Bildschirmanzeigeelements (20a, 20b, 20c, 20d, 20e, 20f) ein Mustererkennungsverfahren ist, das ein Muster oder eine oder mehrere Musteränderungen im Anzeigeelement identifiziert.

8. Verfahren nach Anspruch 5, wobei Musteränderungen Pixelunterschiede zwischen aufeinanderfolgenden Screenshots sind.

9. Verfahren nach einem der Ansprüche 2 bis 8, wobei das Erfassen und Verarbeiten von Screenshot-Daten kontinuierlich oder in vorbestimmten Intervallen durchgeführt wird, und/oder das Anzeigeelement ein Benutzeroberflächenbaustein ist.

10. Verfahren nach einem der Ansprüche 1 bis 9, wobei eine Genauigkeit des Bestimmens einer Korrelation zwischen der Menge von Infrastrukturleistungsindikatoren und der Menge von lokalen Leistungsindikatoren durch Berechnen mindestens eines Leistungsindikators für mindestens einen Infrastrukturleistungsindikator aus der Teilmenge der Mehrzahl von mobilen Endgeräten und Vergleichen des berechneten Leistungsindikators mit dem empfangenen lokalen Leistungsindikator der Teilmenge der Mehrzahl von mobilen Endgeräten verifiziert wird.

11. Netzwerkentität (110) zum Berechnen eines Leistungsindikators, der eine Leistung eines Dienstes an einem von einer Mehrzahl von mobilen Endgeräten (10; 10a, 10b, 10c) angibt, die mit einem Netzwerk (100) verbunden und mit keiner Indikatorbestimmungsfunktion ausgestattet ist, wobei die Netzwerkentität (110) umfasst:
- ein erstes Empfangsmodul, das zum Empfangen einer Menge von Infrastrukturleistungsindikatoren konfiguriert ist, wobei jeder Infrastrukturleistungsindikator für einen Teil des Netzwerks (100) bestimmt wird, der Daten an eines oder mehrere der mobilen Endgeräte überträgt, die mit dem Netzwerk verbunden sind,
- ein zweites Empfangsmodul, das zum Empfangen einer Menge von lokalen Leistungsindikatoren konfiguriert ist, wobei jeder der lokalen Leistungsindikatoren an einem mobilen Endgerät einer Teilmenge der Mehrzahl von mobilen Endgeräten (11; 11a, 11b), die mit dem Netzwerk (100) verbunden und mit einer Fähigkeit zum Bestimmen eines oder mehrerer lokaler Leistungsindikatoren versehen ist, lokal bestimmt wird, ferner konfiguriert zum Ausführen der folgenden Schritte:
- Erfassen (S121) von Screenshot-Daten, die auf einem mobilen Endgerät (11; 11a, 11b) der Teilmenge von mobilen Endgeräten angezeigt werden;
- Verarbeiten (S122) der erfassten Screenshot-Daten zum Bestimmen des Vorhandenseins eines Bildschirmanzeigeelements (20a, 20b, 20c, 20d, 20e, 20f), das die Leistung des Dienstes an dem einen mobilen Endgerät angibt;
- Bestimmen (S123) mindestens eines lokalen Leistungsindikators der Menge von lokalen Leistungsindikatoren unter Verwendung des Bildschirmanzeigeelements (20a, 20b, 20c, 20d, 20e, 20f);
- ein Korrelationsmodul, das zum Bestimmen einer Korrelation zwischen der Menge von Infrastrukturleistungsindikatoren und der Menge von lokalen Leistungsindikatoren konfiguriert ist,
- ein Berechnungsmodul, das so konfiguriert ist, dass es den Leistungsindikator, der die Leistung des Dienstes an einem oder mehreren der Mehrzahl von mobilen Endgeräten (10; 10a, 10b, 10c) angibt, die mit keiner Indikatorbestimmungsfunktion ausgestattet sind, unter Verwendung der Korrelation und eines oder mehrerer Infrastrukturleistungsindikatoren der Menge von Infrastrukturleistungsindikatoren berechnet.

12. System zum Berechnen eines Leistungsindikators, wobei das System eine Netzwerkentität nach Anspruch 11 und ein mobiles Endgerät (11; 11a, 11b) umfasst, das über ein Netzwerk mit der Netzwerkentität verbunden ist, wobei das mobile Endgerät umfasst:
- eine Erfassungseinheit (111-1), die so konfiguriert ist, dass sie Screenshot-Daten erfasst, die auf einem mobilen Endgerät einer Teilmenge von mobilen Endgeräten während einer spezifischen Benutzersitzung angezeigt werden und die tatsächliche Nutzung des Benutzers darstellen;
- eine Verarbeitungseinheit (111-2), die so konfiguriert ist, dass sie die erfassten Screenshot-Daten zum Bestimmen des Vorhandenseins eines Bildschirmanzeigeelements verarbeitet, das die Leistung eines Dienstes an dem einen mobilen Endgerät angibt; und
- eine Analyseeinheit (111-3), die zum Bestimmen mindestens eines lokalen Leistungsindikators unter Verwendung des Bildschirmanzeigeelements konfiguriert ist.

13. Computerprogramm, umfassend Code, wobei der Code bei Ausführung auf Verarbeitungsressourcen die Verarbeitungsressourcen zum Durchführen eines Verfahrens nach einem der Ansprüche 1 bis 10 anweist.

14. Computerprogrammprodukt, das Code speichert, wobei der Code bei Ausführung auf Verarbeitungsressourcen die Verarbeitungsressourcen zum Durchführen eines Verfahrens nach einem der Ansprüche 1 bis 10 anweist.

## Revendications

1. Procédé de calcul d'un indicateur de performance indiquant une performance d'un service au niveau de l'un parmi une pluralité de terminaux mobiles (10 ; 10a, 10b, 10c) reliés à un réseau (100), le procédé comprenant les étapes suivantes :
- la réception (S110) dans une entité de réseau (110) d'un ensemble d'indicateurs de performance d'infrastructure, chaque indicateur de performance d'infrastructure étant déterminé pour une partie du réseau (100) transportant des données à un ou plusieurs desdits terminaux mobiles (10 ; 10a, 10b, 10c ; 11 ; 11a, 11b) reliés au réseau (100) ;
- la détermination d'un ou plusieurs indicateurs de performance locale, chaque indicateur de performance locale étant déterminé localement au niveau d'un terminal mobile d'un sous-ensemble de la pluralité de terminaux mobiles (11 ; 11a, 11b) reliés au réseau (100) et pourvus d'une capacité à déterminer un ou plusieurs indicateurs de performance locale, ladite étape comprenant les étapes suivantes :
- l'acquisition (S121) de données de capture d'écran affichées sur un terminal mobile (11 ; 11a, 11b) dudit sous-ensemble de terminaux mobiles ;
- le traitement (S122) desdites données de capture d'écran acquises pour déterminer la présence d'un élément d'affichage d'écran (20a, 20b, 20c, 20d, 20e, 20f) indiquant la performance du service au niveau dudit terminal mobile ;
- la détermination (S123) d'au moins un indicateur de performance locale de l'ensemble d'indicateurs de performance locale en utilisant ledit élément d'affichage d'écran (20a, 20b, 20c, 20d, 20e, 20f) ;
le procédé comprenant en outre :
- la réception (S120) dans l'entité de réseau (110) d'un ensemble des indicateurs de performance locale ;
- la détermination (S130) d'une corrélation entre l'ensemble d'indicateurs de performance d'infrastructure et l'ensemble d'indicateurs de performance locale ; et
- le calcul (S140) dudit indicateur de performance indiquant la performance du service au niveau d'un ou plusieurs de la pluralité de terminaux mobiles (10 ; 10a, 10b, 10c) non pourvus de fonctions de détermination d'indicateur, en utilisant ladite corrélation et un ou plusieurs indicateurs de performance d'infrastructure dudit ensemble d'indicateurs de performance d'infrastructure.

2. Procédé selon la revendication 1, dans lequel l'indicateur de performance calculé est calculé pour un terminal mobile (10 ; 10a, 10b, 10c) pour lequel un indicateur de performance locale déterminé localement au niveau du terminal mobile n'est pas disponible.

3. Procédé selon la revendication 1 ou 2, dans lequel l'ensemble d'indicateurs de performance d'infrastructure est déterminé pour une session d'utilisateur spécifique et/ou un ou plusieurs de l'ensemble d'indicateurs de performance d'infrastructure sont déterminés en parallèle.

4. Procédé selon l'une quelconque des revendications 1 à 3, dans lequel au moins un indicateur de performance d'infrastructure de l'ensemble d'indicateurs de performance d'infrastructure est une valeur de métrique de couche de transport indiquant une performance de couche de transport pour le trafic de données et/ou au moins un indicateur de performance d'infrastructure de l'ensemble d'indicateurs de performance d'infrastructure est une métrique de réseau d'accès radio, RAN, indiquant une performance au niveau du RAN pour le trafic de données.

5. Procédé selon l'une quelconque des revendications 1 à 4, dans lequel au moins un indicateur de performance locale de l'ensemble d'indicateurs de performance locale est une valeur de qualité d'expérience, QoE, indiquant une performance au niveau d'un terminal mobile et/ou au moins un indicateur de performance locale de l'ensemble d'indicateurs de performance locale est une métrique de retard, indiquant des retards subis sur le terminal mobile (11 ; 11a, 11b) lors de l'accès à un service donné.

6. Procédé selon l'une quelconque des revendications 1 à 5, dans lequel la détermination d'au moins un indicateur de performance locale de l'ensemble d'indicateurs de performance locale est déterminée pour une application affichée sur le terminal mobile, par l'intermédiaire de données de capture d'écran acquises ; et/ou la détermination d'au moins un indicateur de performance locale de l'ensemble d'indicateurs de performance locale est influencée par des informations relatives à l'écran décrivant une opération de l'écran (111) ; et/ou les informations relatives à l'écran sont au moins l'un parmi un événement de marche/arrêt d'écran, un changement d'orientation d'écran et des informations sur une app qui se trouve dans un arrière-plan du terminal à un point donné dans le temps.

7. Procédé selon l'une quelconque des revendications 1 à 6, dans lequel le traitement des données de capture d'écran acquises pour la détermination de la présence d'un élément d'affichage d'écran (20a, 20b, 20c, 20d, 20e, 20f) est un procédé de reconnaissance de motif identifiant un motif ou un ou plusieurs changements de motif dans l'élément d'affichage.

8. Procédé selon la revendication 5, dans lequel des changements de motif sont des différences de pixels entre des captures d'écran suivantes.

9. Procédé selon l'une quelconque des revendications 2 à 8, dans lequel l'acquisition et le traitement de données de capture d'écran sont effectués en continu ou à des intervalles prédéterminés et/ou l'élément d'affichage est un bloc de construction d'interface utilisateur.

10. Procédé selon l'une quelconque des revendications 1 à 9, dans lequel une précision de détermination d'une corrélation entre l'ensemble d'indicateurs de performance d'infrastructure et l'ensemble d'indicateurs de performance locale est vérifiée par le calcul d'au moins un indicateur de performance pour au moins un indicateur de performance d'infrastructure du sous-ensemble de la pluralité de terminaux mobiles et la comparaison de l'indicateur de performance calculé à l'indicateur de performance locale reçu du sous-ensemble de la pluralité de terminaux mobiles.

11. Entité de réseau (110) pour calculer un indicateur de performance indiquant une performance d'un service au niveau de l'un parmi une pluralité de terminaux mobiles (10 ; 10a, 10b, 10c) reliés à un réseau (100) et non pourvus de fonctions de détermination d'indicateur, l'entité de réseau (110) comprenant :
- un premier module de réception configuré pour recevoir un ensemble d'indicateurs de performance d'infrastructure, chaque indicateur de performance d'infrastructure étant déterminé pour une partie du réseau (100) transportant des données à un ou plusieurs desdits terminaux mobiles reliés au réseau,
- un deuxième module de réception configuré pour recevoir un ensemble d'indicateurs de performance locale, chacun des indicateurs de performance locale étant déterminé localement au niveau d'un terminal mobile d'un sous-ensemble de la pluralité de terminaux mobiles (11 ; 11a, 11b) reliés au réseau (100) et pourvus d'une capacité à déterminer un ou plusieurs indicateurs de performance locale, configurée en outre pour réaliser les étapes suivantes :
- l'acquisition (S121) de données de capture d'écran affichées sur un terminal mobile (11 ; 11a, 11b) dudit sous-ensemble de terminaux mobiles ;
- le traitement (S122) desdites données de capture d'écran acquises pour déterminer la présence d'un élément d'affichage d'écran (20a, 20b, 20c, 20d, 20e, 20f) indiquant la performance du service au niveau dudit terminal mobile ;
- la détermination (S123) d'au moins un indicateur de performance locale de l'ensemble d'indicateurs de performance locale en utilisant ledit élément d'affichage d'écran (20a, 20b, 20c, 20d, 20e, 20f) ;
- un module de corrélation configuré pour déterminer une corrélation entre l'ensemble d'indicateurs de performance d'infrastructure et l'ensemble d'indicateurs de performance locale ; et
- un module de calcul configuré pour calculer ledit indicateur de performance indiquant la performance du service au niveau d'un ou plusieurs terminaux mobiles (10 ; 10a, 10b, 10c) non pourvus de fonctions de détermination d'indicateur, en utilisant ladite corrélation et un ou plusieurs indicateurs de performance d'infrastructure dudit ensemble d'indicateurs de performance d'infrastructure.

12. Système pour calculer un indicateur de performance, le système incluant une entité de réseau selon la revendication 11 et un terminal mobile (11 ; 11a, 11b) relié à l'entité de réseau par l'intermédiaire d'un réseau, le terminal mobile comprenant :
- une unité d'acquisition (111-1) configurée pour acquérir des données de capture d'écran affichées sur un terminal mobile d'un sous-ensemble de terminaux mobiles au cours d'une session d'utilisateur spécifique représentant l'utilisation réelle de l'utilisateur ;
- une unité de traitement (111-2) configurée pour traiter lesdites données de capture d'écran acquises pour déterminer la présence d'un élément d'affichage d'écran indiquant la performance d'un service au niveau du terminal mobile ; et
- une unité d'analyse (111-3) configurée pour déterminer au moins un indicateur de performance locale en utilisant ledit élément d'affichage d'écran.

13. Programme informatique comprenant un code, dans lequel le code, lorsqu'il est exécuté sur des ressources de traitement, ordonne auxdites ressources de traitement de réaliser un procédé selon l'une quelconque des revendications 1 à 10.

14. Produit de programme informatique stockant un code, dans lequel le code, lorsqu'il est exécuté sur des ressources de traitement, ordonne auxdites ressources de traitement de réaliser un procédé selon l'une quelconque des revendications 1 à 10.
